# EUROPEAN PATENT APPLICATION

(11) **EP 4 768 292 A1**
(43) Date of publication of application: **01.07.2026**
(21) Application number: 25221264.2
(22) Date of filing: 05.12.2025
(51) Int. Cl.: B60J 10/235, B60J 10/27, B60J 10/76

(54) **ZERO-OFFSET DOOR SEALING SYSTEM**

(30) Priority: 13.12.2024 CN 202411835810
(71) Applicant: Xingyu Auto Parts Inc., Xianju County, Zhejiang Province 317300 (CN)
(72) Inventor: Zhang, Hao, Xianju County, Zhejiang Province, 317300 (CN); Feng, Xinjian, Xianju County, Zhejiang Province, 317300 (CN); Zhang, Tong, Xianju County, Zhejiang Province, 317300 (CN); Wu, Hanhui, Xianju County, Zhejiang Province, 317300 (CN); Chen, Keyu, Xianju County, Zhejiang Province, 317300 (CN); Wu, Caixing, Xianju County, Zhejiang Province, 317300 (CN)
(74) Representative: Cabinet Chaillot

(57) **Abstract**

The invention discloses a zero-offset door sealing system, belonging to the technical field of automobile doors. It solves the problem of needing to prevent water ingress through gaps between the movable glass and the guide channel sealing strip, and between the movable glass and the sealing lip edge, thereby avoiding rainwater entering the internal structure of the door and spreading within it, which subsequently leads to issues of water ingress and moisture inside the door. The zero-offset door sealing system comprises a plastic bracket, being strip-shaped and open along one side in its length direction; one end of the plastic bracket is integrally formed with a flared connecting bracket; an upper waterproof guide frame, embedded within the connecting bracket. The invention is applied in a car door, achieving sealing through contact between the movable glass and the waterproof plates, preventing rainwater leakage, reducing displacement resistance, and ensuring stable sliding; the integrated structure of the interior trim strip and the inner waterproof plate enhances sealing; the split structure facilitates production and assembly, ensures door sealing effect, prevents rainwater diffusion, and protects the door structure.

## Description

### TECHNICAL FIELD

The invention relates to the technical field of automobile doors, and more particularly, to a zero-offset door sealing system.

### BACKGROUND ART

In modern automotive design, to enhance aesthetic quality, reduce wind resistance and wind noise (improve NVH performance), the "zero-offset" design, where the door glass and the outer door panel transition seamlessly without a step, has become an important development trend. This design requires that when the window glass is closed, its outer surface forms a nearly perfect continuous curved surface with the door beltline and the body trim above it.

To achieve this goal, the industry has developed various precise glass guiding and sealing solutions. For example, Chinese Utility Model Patent CN218085033U discloses a zero-offset door system. This system, by adopting specially designed dual-material injection molded sliders and guide rail sealing strips, achieves precise restriction of the movable glass's movement trajectory in the X and Y directions, successfully accomplishes the flush side styling of the door, and improves the sealing performance of the glass at the window frame position. Such technologies represent the current mainstream technical level in achieving "zero-offset" exterior styling and beltline sealing.

However, existing technologies, including the solutions disclosed in the aforementioned patent, generally focus on the sealing of the visible area above the door beltline, i.e., how to construct the first line of waterproof defense. But a long-standing and non-negligible technical challenge in practice is: no beltline sealing strip can achieve 100% waterproofing. Under conditions such as heavy rain, high-pressure car washing, or after long-term vehicle use leading to seal aging, some rainwater will inevitably bypass this first line of defense and flow along the glass surface into the internal cavity of the door.

For this portion of intruding water flow, existing technologies generally lack a systematic and efficient management mechanism. Typically, this water flow drips down to the bottom of the door inner cavity under gravity, or spreads arbitrarily inside the door. This uncontrolled water diffusion leads to a series of serious problems: components inside the door such as the window regulator motor, door lock module, speaker unit, various wiring harnesses, and electronic components can corrode or short-circuit due to long-term exposure to a humid environment, causing functional failure and posing safety hazards; moisture can penetrate the door interior trim panel, causing it to mold, deform, and produce odors, severely affecting the interior environment and driving experience; accumulated moisture and water at the bottom of the door inner cavity can accelerate the corrosion of the door sheet metal parts, shortening the door's service life.

Therefore, an urgent technical problem to be solved in this field is: how to provide a door sealing system that can not only achieve a zero-offset exterior styling but also effectively manage and block the secondary water flow that infiltrates after passing the first main sealing strip below the door beltline, thereby providing reliable sealing and stable guidance for the lower part of the main window glass, thus comprehensively protecting the precise components inside the door from moisture damage.

### SUMMARY OF THE INVENTION

The invention aims to solve the technical problem that existing zero-offset door sealing solutions generally focus only on external sealing above the beltline while neglecting the effective management of water flow that inevitably intrudes into the door interior. Such uncontrolled water flow can corrode internal mechanisms like window regulators and door locks and damage interior trim panels, severely affecting vehicle reliability and durability.

In order to solve the above purpose, the invention adopts the following technical solutions.

A zero-offset door sealing system, comprising:
a plastic bracket, being strip-shaped and open along one side in its length direction; one end of the plastic bracket is integrally formed with a flared connecting bracket;
an upper waterproof guide frame, embedded within the connecting bracket; one side of the upper waterproof guide frame is fixedly connected to an outer upper waterproof plate located below the beltline;
a lower waterproof guide frame, embedded within the plastic bracket and located below the upper waterproof guide frame; one side of the lower waterproof guide frame is fixedly connected to an outer lower waterproof plate located below the outer upper waterproof plate;
an upper connecting rail, embedded within an inner ring of the upper waterproof guide frame and located above the lower waterproof guide frame; one side of the upper connecting rail is fixedly connected to an upper reinforcement plate, and the plastic bracket is fixedly connected to a lower reinforcement plate located below the upper reinforcement plate;
an elongated interior trim strip, sleeved on an outside of the upper reinforcement plate and the lower reinforcement plate; one side of the interior trim strip facing the outer upper waterproof plate and the outer lower waterproof plate is fixedly connected to an inner waterproof plate;
the inner waterproof plate, outer upper waterproof plate, and outer lower waterproof plate all have elastic deformation properties, and the outer upper waterproof plate, outer lower waterproof plate, and inner waterproof plate form a space allowing for displacement of a movable glass.

Preferably, the upper reinforcement plate and the lower reinforcement plate are arranged spaced apart.

Preferably, the upper connecting rail is fixedly connected to a protruding strip, the upper connecting rail is provided with an inner mounting strip matching the protruding strip, the inner mounting strip is fixedly connected to an inner guide strip, and the inner guide strip is fixedly connected to an inside waterproof plate usable for contacting an end face of the movable glass.

Preferably, a slider with a circular cross-section is slidably connected inside the inner guide strip; one side of the slider is fixedly connected to a connecting strip, and the side of the connecting strip away from the slider is fixedly connected to a sheet-like connecting piece; the end face of the connecting piece is fixedly connected to a sealing strip usable for fixedly contacting the end face of the movable glass.

Preferably, the connecting piece is fixedly connected to the movable glass via the sealing strip.

Preferably, the sealing strip and the inside waterproof plate are arranged on opposite sides of the movable glass.

Preferably, the side of the inner guide strip away from the inside waterproof plate is fixedly connected to an elongated upper water baffle that abuts against the interior trim strip; the lower waterproof guide frame is fixedly connected to a lower water baffle located below the upper water baffle, and the lower water baffle also abuts against the interior trim strip.

Preferably, the cross-section of the interior trim strip is U-shaped, and an inner ring side of the interior trim strip is fixedly connected to a plurality of inner lip edges; the interior trim strip clamps and fixes the upper reinforcement plate and the lower reinforcement plate via the plurality of inner lip edges.

Preferably, the inner ring of the upper waterproof guide frame is fixedly connected to an inner support flange located above an inner bottom surface of the connecting bracket, and an inner ring of the inner support flange forms a channel allowing for displacement of the slider and the connecting strip.

Preferably, an upper end of the inner support flange located at an outer ring of the channel is provided with a guide groove, and the cross-sectional area of the channel opening at the guide groove gradually decreases from top to bottom.

Preferably, the outer upper waterproof plate comprises an arc-shaped outer upper main waterproof portion, and the outer lower waterproof plate comprises an arc-shaped outer lower main waterproof portion having the same cross-sectional shape as the outer upper main waterproof portion.

Preferably, the outer upper waterproof plate further comprises an arc-shaped outer upper auxiliary waterproof portion, and the arc length of the outer upper auxiliary waterproof portion is less than the arc length of the outer upper main waterproof portion; the outer lower waterproof plate further comprises an arc-shaped outer lower auxiliary waterproof portion having the same cross-sectional shape as the outer upper auxiliary waterproof portion, and the cross-section of the outer lower auxiliary waterproof portion is the same as the cross-section of the outer upper auxiliary waterproof portion; the outer lower auxiliary waterproof portion and the outer upper auxiliary waterproof portion are both arranged fitting against one side of the plastic bracket and the connecting bracket.

Preferably, the slider has a circular cross-section to achieve low-friction line-contact sliding within the inner guide strip.

Preferably, the interior trim strip and the inner waterproof plate are an integrally formed structure to enhance the structural integrity and water tightness of this assembly.

Preferably, the flared setting of the connecting bracket forms an introduction slope for guiding the rapid positioning and assembly of the upper waterproof guide frame.

Preferably, it further comprises an inner guide strip, and an assembly slidable within the inner guide strip; the assembly comprises a slider with a circular cross-section, a connecting piece, and a sealing strip for contacting the movable glass.

Compared with the existing technology, the invention has the following beneficial effects.
1. When the movable glass descends below the beltline, it is completely accommodated within the guiding channel formed by the inner waterproof plate, the outer upper waterproof plate, and the outer lower waterproof plate. This structure can effectively receive and block any rainwater seeping along the glass or guide rails, and guide it orderly to the bottom of the door for discharge, fundamentally solving the problem of rainwater spreading arbitrarily within the door cavity causing component corrosion and damage, and ensuring long-term dryness inside the door.
2. When the movable glass descends below the beltline, it is completely accommodated within the guiding channel formed by the inner waterproof plate, the outer upper waterproof plate, and the outer lower waterproof plate. This structure can effectively receive and block rainwater seeping along the glass or guide rails, and guide it orderly to the bottom of the door for discharge, fundamentally solving the problem of rainwater spreading arbitrarily within the door cavity causing component corrosion and damage, and ensuring long-term dryness inside the door.
3. The circular cross-section design of the slider converts traditional surface friction into low-resistance line-contact sliding, reducing the motion resistance during glass lifting and lowering, ensuring its operation is stable and smooth, without sticking or abnormal noise. Meanwhile, the waterproof plates and sealing strips on both the inner and outer sides form an effective flexible clamping seal on the glass, ensuring excellent sealing performance.
4. The integrated structure of the interior trim strip and the inner waterproof plate eliminates potential assembly gaps present in split structures, forming a more complete and reliable sealing interface when contacting the movable glass, and cooperating with the multiple waterproof plate structure to enhance the vehicle's overall sealing performance and durability.

### BRIEF DESCRIPTION OF ACCOMPANY DRAWINGS

To describe the technical solutions in the embodiments of the invention more clearly, the following briefly introduces the accompanying drawings required for describing the embodiments. It should be understood that the following drawings show only certain embodiments of the invention and therefore should not be considered as limiting the scope. For those skilled in the art, other related drawings can be obtained based on these drawings without creative effort.
FIG. 1 is a schematic structural diagram of the invention;
FIG. 2 is a first cross-sectional view of the invention;
FIG. 3 is an enlarged view of section A in FIG. 2;
FIG. 4 is a second cross-sectional view of the invention;
FIG. 5 is an enlarged view of section B in FIG. 4;
FIG. 6 is a structural diagram of the plastic bracket, waterproof guide frames, outer upper waterproof plate, and outer lower waterproof plate in the invention;
FIG. 7 is an enlarged view of section C in FIG. 6.

In the drawings: 1 refers to the movable glass; 2 refers to the plastic bracket; 3 refers to the connecting bracket; 4 refers to the upper waterproof guide frame; 5 refers to the upper connecting rail; 6 refers to the protruding strip; 7 refers to the upper reinforcement plate; 8 refers to the interior trim strip; 9 refers to the inner lip edge; 10 refers to the inner waterproof plate; 11 refers to the outer upper waterproof plate; 12 refers to the outer upper main waterproof portion; 13 refers to the outer upper auxiliary waterproof portion; 14 refers to the inner mounting strip; 15 refers to the inner guide strip; 16 refers to the inside waterproof plate; 17 refers to the upper water baffle; 18 refers to the slider; 19 refers to the connecting strip; 20 refers to the connecting piece; 21 refers to the sealing strip; 22 refers to the outer lower waterproof plate; 23 refers to the outer lower main waterproof portion; 24 refers to the outer lower auxiliary waterproof portion; 25 refers to the inner support edge; 26 refers to the guide groove; 27 refers to the lower water baffle.

### SPECIFIC EMBODIMENT OF THE INVENTION

In order to make the objectives, technical solutions, and advantages of the embodiments of the invention clearer, the technical solutions in the embodiments of the invention will be described clearly and completely hereinafter with reference to the drawings in the embodiments of the invention. Obviously, the described embodiments are part of the embodiments of the invention, rather than all of the embodiments. The components of the embodiments of the invention generally described and illustrated in the drawings herein may be arranged and designed in various different configurations.

Therefore, the following detailed description of the embodiments of the invention provided in the drawings is not intended to limit the scope of the claimed invention, but merely represents selected embodiments of the invention. Based on the embodiments of the invention, all other embodiments obtained by those of ordinary skill in the art without creative efforts shall all fall within the protection scope of the invention.

The term "fixedly connected" mentioned between different components of the invention can be achieved by various means well-known to those skilled in the art. These means include, but are not limited to: adhesive bonding, ultrasonic welding, connection via mechanical fasteners such as clips or screws, or integrally forming the components through processes like co-extrusion.

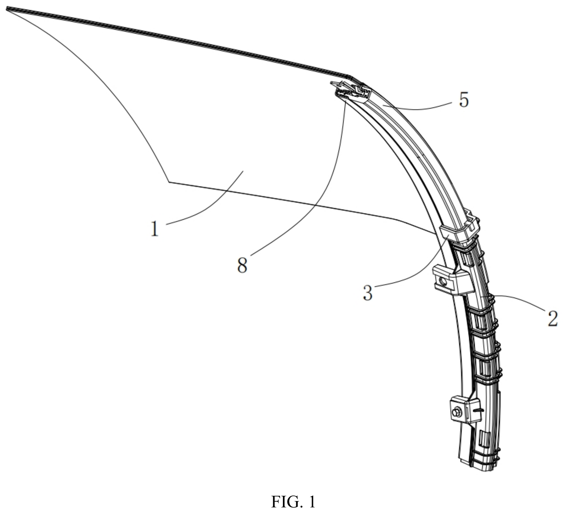

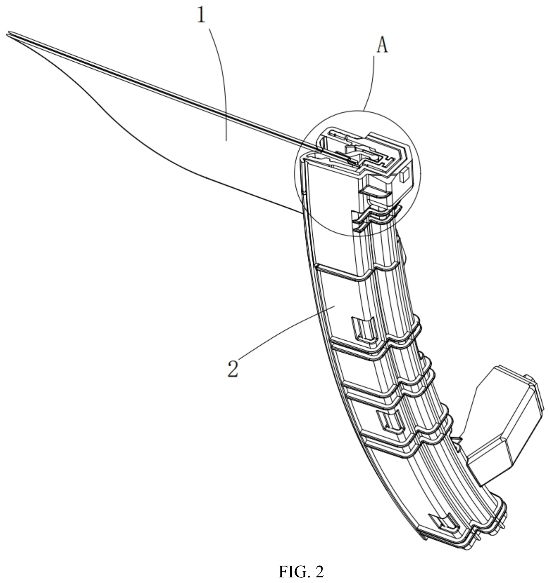

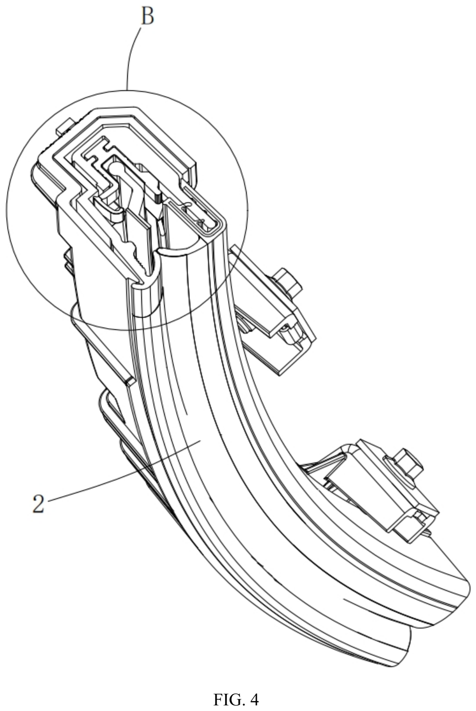

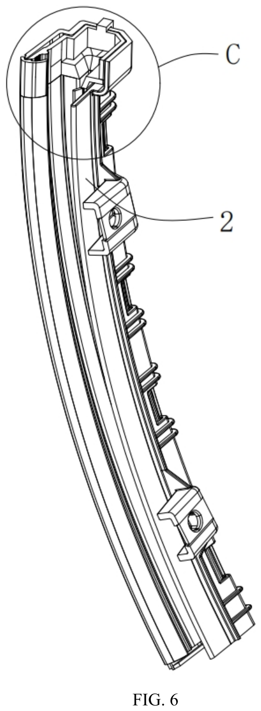

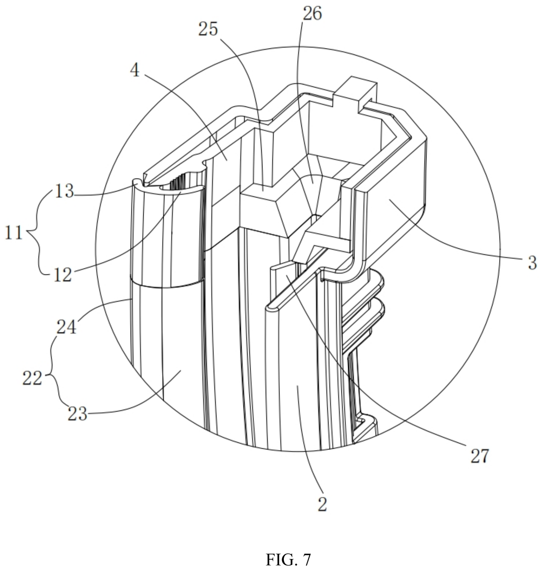

As shown in FIGS. 1-7, a zero-offset door sealing system, comprising:
a plastic bracket 2, being strip-shaped and open along one side in its length direction; one end of the plastic bracket 2 is integrally formed with a flared connecting bracket 3;
an upper waterproof guide frame 4, embedded within the connecting bracket 3; one side of the upper waterproof guide frame 4 is fixedly connected to an outer upper waterproof plate 11 located below the beltline;
a lower waterproof guide frame, embedded within the plastic bracket 2 and located below the upper waterproof guide frame 4; one side of the lower waterproof guide frame is fixedly connected to an outer lower waterproof plate 22 located below the outer upper waterproof plate 11;
an upper connecting rail 5, embedded within an inner ring of the upper waterproof guide frame 4 and located above the lower waterproof guide frame; one side of the upper connecting rail 5 is fixedly connected to an upper reinforcement plate 7, and the plastic bracket 2 is fixedly connected to a lower reinforcement plate located below the upper reinforcement plate 7;
preferably, the upper reinforcement plate 7 and the lower reinforcement plate are arranged spaced apart; specifically: the upper reinforcement plate 7 and the lower reinforcement plate form an interval region distributed along the length direction of the plastic bracket, reducing material usage while ensuring structural strength;
an elongated interior trim strip 8, sleeved on an outside of the upper reinforcement plate 7 and the lower reinforcement plate; one side of the interior trim strip 8 facing the outer upper waterproof plate 11 and the outer lower waterproof plate 22 is fixedly connected to an inner waterproof plate 10 with the same length as the interior trim strip 8;
the inner waterproof plate 10, outer upper waterproof plate 11, and outer lower waterproof plate 22 all have elastic deformation properties, and the outer upper waterproof plate 11, outer lower waterproof plate 22, and inner waterproof plate 10 form a space allowing for displacement of a movable glass 1.

Preferably, components that directly contact the movable glass 1 to achieve sealing, such as the inner waterproof plate 10, outer upper waterproof plate 11, outer lower waterproof plate 22, and inner waterproof plate 16, are all made of an elastomer with excellent weather resistance, ozone resistance, and elasticity. A particularly preferred material is Ethylene Propylene Diene Monomer (EPDM), which demonstrates outstanding durability in automotive sealing applications. To balance sealing and sliding friction, EPDM material with a Shore A hardness in the range of 40 to 90, for example, 70±5, can be selected. Furthermore, other materials such as Thermoplastic Elastomers (TPEs), Polyvinyl Chloride (PVC), etc., can also be used as alternatives.

The plastic bracket 2 and the connecting bracket 3 are installed inside the car door, both located below the beltline within the door. They primarily serve to support and fix other structures, while also being used to receive and drain rainwater. The upper waterproof guide frame mainly serves an undertaking function. Under the condition that the plastic bracket 2 and the connecting bracket 3 connect to the upper connecting rail 5, the structure of the outer upper waterproof plate 11 is added, thereby extending the upper end of the outer lower waterproof plate 22 on the plastic bracket 2 and the lower reinforcement plate, allowing the upper end of the outer upper waterproof plate 11 to extend to the upper end of the connecting bracket 3, avoiding water leakage at the connection between the upper connecting rail 5 and the connecting bracket 3 when the movable glass 1 is present. Simultaneously, the elastic edges of the outer upper waterproof plate 11 and the outer lower waterproof plate 22 on the upper waterproof guide frame 4 and the lower waterproof guide frame lightly contact the outer surface of the glass, which can prevent rainwater flowing in between the movable glass 1 and the guide rails from spreading towards other structures inside the door.

The "flared setting" of the connecting bracket 3 is a typical "fool-proof" and "easy assembly" design, forming a guiding entrance that facilitates the quick and accurate embedding of the upper waterproof guide frame 4 during assembly.

Similarly, the interior trim strip 8 and the inner waterproof plate 10 fixedly connected thereto can cooperate with the outer upper waterproof plate 11 and the outer lower waterproof plate 22 to further block rainwater entering between the movable glass 1 and the guide rails, preventing rainwater from spreading towards other structures inside the door. Moreover, the interior trim strip 8 and the inner waterproof plate 10 fixedly connected thereto can also seal the gap between the movable glass 1 and the window frame when the movable glass 1 closes the window, ensuring the sealing effect when the movable glass 1 is closed.

The integrated structure of the interior trim strip 8 and inner waterproof plate 10 can be manufactured through a co-extrusion process, ensuring that even if water vapor intrudes under extreme conditions, it will not contaminate the door's interior trim panel.

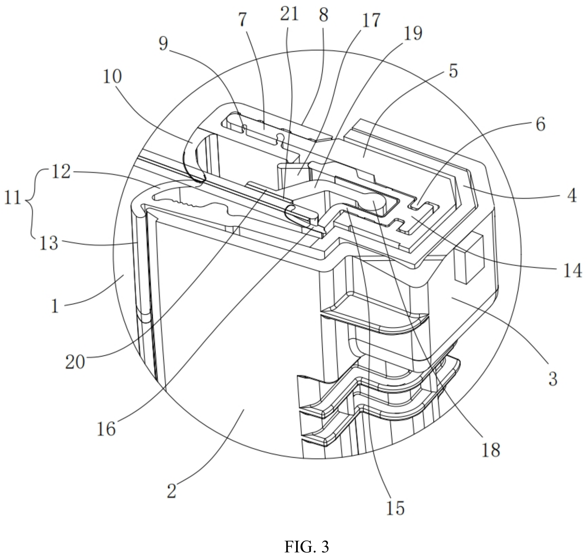

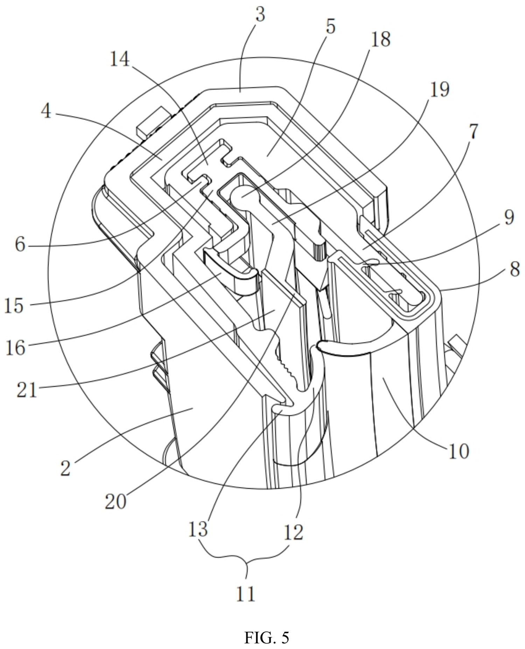

Preferably, as shown in FIGS. 3 and 5, the upper connecting rail 5 is fixedly connected to a protruding strip 6, the upper connecting rail 5 is provided with an inner mounting strip 14 matching the protruding strip 6, the inner mounting strip 14 is fixedly connected to an inner guide strip 15, and the inner guide strip 15 is fixedly connected to an inside waterproof plate 16 usable for contacting an end face of the movable glass 1.

Through the provision of the protruding strip 6, the connection strength of the inner mounting strip 14 within the upper connecting rail 5 is increased during connection, making its installation more stable. The inner guide strip 15 fixedly connected to the inner mounting strip 14 provides a guiding space for the displacement of the slider 18, and the inside waterproof plate 16 fixed to the inner guide strip 15 adds an additional barrier against rainwater on the movable glass 1.

Preferably, a slider 18 with a circular cross-section is slidably connected inside the inner guide strip 15; one side of the slider 18 is fixedly connected to a connecting strip 19, and the side of the connecting strip 19 away from the slider 18 is fixedly connected to a sheet-like connecting piece 20; the end face of the connecting piece 20 is fixedly connected to a sealing strip 21 usable for fixedly contacting the end face of the movable glass 1. The sealing strip 21 and the inside waterproof plate 16 are respectively arranged on opposite sides of the movable glass 1.

Since the cross-section of the slider 18 is circular, the contact area when the slider 18 slides inside the inner guide strip 15 can be minimized, thereby reducing the resistance generated during the sliding of the slider 18, making the displacement of the slider 18 following the movable glass 1 smoother. The provision of the sealing strip 21 ensures a good fixed connection effect between the end face of the movable glass 1 and the connecting piece 20.

To further reduce the resistance during the lifting and lowering of the movable glass 1, improve the smoothness of operation and reduce noise, a low-friction coating can be applied to the inner sliding surface of the inner guide strip 15 and/or the outer sliding surface of the slider 18. Such coatings can be, for example, low-friction coefficient sliding materials, or Polytetrafluoroethylene (PTFE) coatings or Molybdenum Disulfide (MoS₂) coatings. These dry film lubricating coatings have extremely low coefficients of friction, ensuring smooth and effortless movement of the slider over long-term use.

The low-friction coefficient sliding material is prepared according to the formula and preparation method mentioned in any embodiment of Chinese Invention Patent CN117186524A, preferably the formula and process of Embodiment 8.

Preferably, the side of the inner guide strip 15 away from the inside waterproof plate 16 is fixedly connected to an elongated upper water baffle 17 that abuts against the interior trim strip 8; the lower waterproof guide frame is fixedly connected to a lower water baffle 27 located below the upper water baffle 17, and the lower water baffle 27 also abuts against the interior trim strip 8.

The provision of the upper water baffle 17 and the lower water baffle 27 is to abut against the interior trim strip 8, so that even if there is leakage at the connection between the interior trim strip 8 and the upper reinforcement plate 7 and the lower reinforcement plate, it can still be blocked by the upper water baffle 17 and the lower water baffle 27, preventing rainwater from spreading towards other structures inside the door.

Preferably, the cross-section of the interior trim strip 8 is U-shaped, and an inner ring side of the interior trim strip 8 is fixedly connected to a plurality of inner lip edges 9; the interior trim strip 8 clamps and fixes the upper reinforcement plate 7 and the lower reinforcement plate via the plurality of inner lip edges 9.

When the interior trim strip 8 needs to be connected to the upper reinforcement plate 7 and the lower reinforcement plate, it can clamp the upper reinforcement plate 7 and the lower reinforcement plate through the inner lip edges 9, thereby increasing the connection strength during the installation of the interior trim strip 8.

Preferably, the inner ring of the upper waterproof guide frame 4 is fixedly connected to an inner support flange 25 located above an inner bottom surface of the connecting bracket 3, and an inner ring of the inner support flange 25 forms a channel allowing for displacement of the slider 18 and the connecting strip 19.

The inner support flange 25 can provide a supporting effect for the upper waterproof guide frame 4.

Preferably, an upper end of the inner support flange 25 located at an outer ring of the channel is provided with a guide groove 26, and the cross-sectional area of the channel opening at the guide groove 26 gradually decreases from top to bottom. As a beneficial effect, this setting acts to automatically center and guide the slider 18, ensuring the glass can smoothly enter the guiding track during the descent process.

The provision of the guide groove 26 ensures that when the slider 18 follows the movable glass 1 downward, it can be guided by the guide groove 26, allowing the slider 18 to slide more smoothly past the seams connecting the upper connecting rail 5, the connecting bracket 3, and the plastic bracket 2.

Preferably, the outer upper waterproof plate 11 comprises an arc-shaped outer upper main waterproof portion 12, and the outer lower waterproof plate 22 comprises an arc-shaped outer lower main waterproof portion 23 having the same cross-sectional shape as the outer upper main waterproof portion 12.

The outer upper waterproof plate 11 further comprises an arc-shaped outer upper auxiliary waterproof portion 13, and the arc length of the outer upper auxiliary waterproof portion 13 is less than the arc length of the outer upper main waterproof portion 12; the outer lower waterproof plate 22 further comprises an arc-shaped outer lower auxiliary waterproof portion 24 having the same cross-sectional shape as the outer upper auxiliary waterproof portion 13, and the cross-section of the outer lower auxiliary waterproof portion 24 is the same as the cross-section of the outer upper auxiliary waterproof portion 13; the outer lower auxiliary waterproof portion 24 and the outer upper auxiliary waterproof portion 13 are both arranged fitting against one side of the plastic bracket 2 and the connecting bracket 3.

Preferably, it further comprises the movable glass 1, and the connecting piece 20 is fixedly connected to the movable glass 1 via the sealing strip 21.

Preferably, the sealing strip 21 can be a 3M double-sided tape or a specialized adhesive.

When rainwater bypasses the first seal above the door beltline, it flows downward along the outer surface of the movable glass 1. Rainwater reaching below the beltline is effectively received by the arc-shaped waterproof plates constituted by the outer upper main waterproof portion 12 and the outer lower main waterproof portion 23, preventing water droplets from directly splashing onto key components inside the door such as the window regulator and door lock. The collected water flow, under gravity, is controllably guided along the overall structural contour of the plastic bracket 2 to the lowest part of the door inner cavity, and is finally discharged out of the vehicle through pre-set drainage holes in the door sheet metal.

In addition to the arc-shaped cross-section shown in the drawings, the outer waterproof plates 11, 22 and inner waterproof plate 10 can also be designed with other cross-sectional shapes possessing efficient sealing functions. For example, they can have hollow "D"-shaped, "P"-shaped, or tubular cross-sections to provide greater compression travel and more stable sealing pressure. Alternatively, they can be designed with two or more flexible sealing lip structures, forming multiple sealing lines when contacting the movable glass, constituting a labyrinth seal, further enhancing waterproof performance.

As an alternative to the sliding fit, the guiding assembly can also adopt a rolling friction approach. For example, the slider 18 can be replaced with a set of rolling elements, such as micro rollers or ball bearings. These rolling elements roll inside the inner guide strip 15, thereby converting sliding friction into rolling friction, which can significantly reduce motion resistance, especially suitable for heavier window glass.

In another embodiment, the components in the support assembly, such as the plastic bracket 2, connecting bracket 3, upper waterproof guide frame 4, and lower waterproof guide frame, need not be multiple independently assembled parts, but can be manufactured into a single, integral frame structure through injection molding. This design can reduce the number of parts, simplify the assembly process, and lower production costs.

The invention is applied to a zero-offset door, enabling the movable glass 1 to closely contact the waterproof plates, effectively sealing and preventing rainwater leakage. When the movable glass 1 moves up and down, through the cooperation of the sealing strip 21 and the connecting piece 20, the slider 18 slides within the guide rail, reducing resistance and ensuring stable displacement of the movable glass 1, minimizing sticking. The interior trim strip 8 and the inner waterproof plate 10 form an integrated structure, enhancing the sealing effect, while the split design of structures like the plastic bracket 2 and the upper connecting rail 5 facilitates production and assembly, maintaining door sealing. When the movable glass 1 submerges below the beltline, even if rainwater leaks down, it can be effectively blocked, protecting the door structure and avoiding moisture damage.

The above descriptions are only preferred embodiments of the invention and are not intended to limit the invention. For those skilled in the art, the invention may have various modifications and changes. Any modifications, equivalent replacements, improvements, etc., made within the spirit and principles of the invention shall be included within the protection scope of the invention.

## Claims

1. A zero-offset door sealing system, comprising:
a plastic bracket, being strip-shaped and open along one side in its length direction; one end of the plastic bracket is integrally formed with a flared connecting bracket;
an upper waterproof guide frame, embedded within the connecting bracket; one side of the upper waterproof guide frame is fixedly connected to an outer upper waterproof plate located below the beltline;
a lower waterproof guide frame, embedded within the plastic bracket and located below the upper waterproof guide frame; one side of the lower waterproof guide frame is fixedly connected to an outer lower waterproof plate located below the outer upper waterproof plate;
an upper connecting rail, embedded within an inner ring of the upper waterproof guide frame and located above the lower waterproof guide frame; one side of the upper connecting rail is fixedly connected to an upper reinforcement plate, and the plastic bracket is fixedly connected to a lower reinforcement plate located below the upper reinforcement plate;
an elongated interior trim strip, sleeved on an outside of the upper reinforcement plate and the lower reinforcement plate; one side of the interior trim strip facing the outer upper waterproof plate and the outer lower waterproof plate is fixedly connected to an inner waterproof plate;
the inner waterproof plate, outer upper waterproof plate, and outer lower waterproof plate all have elastic deformation properties, and the outer upper waterproof plate, outer lower waterproof plate, and inner waterproof plate form a space allowing for displacement of a movable glass.

2. The zero-offset door sealing system according to claim 1, wherein the upper reinforcement plate and the lower reinforcement plate are arranged spaced apart.

3. The zero-offset door sealing system according to claim 1, wherein the upper connecting rail is fixedly connected to a protruding strip, the upper connecting rail is provided with an inner mounting strip matching the protruding strip, the inner mounting strip is fixedly connected to an inner guide strip, and the inner guide strip is fixedly connected to an inside waterproof plate usable for contacting an end face of the movable glass.

4. The zero-offset door sealing system according to claim 3, wherein a slider with a circular cross-section is slidably connected inside the inner guide strip; one side of the slider is fixedly connected to a connecting strip, and the side of the connecting strip away from the slider is fixedly connected to a sheet-like connecting piece; the end face of the connecting piece is fixedly connected to a sealing strip usable for fixedly contacting the end face of the movable glass.

5. The zero-offset door sealing system according to claim 4, wherein the connecting piece is fixedly connected to the movable glass via the sealing strip.

6. The zero-offset door sealing system according to claim 3 or 4 or 5, wherein the sealing strip and the inside waterproof plate are arranged on opposite sides of the movable glass.

7. The zero-offset door sealing system according to claim 3, wherein the side of the inner guide strip away from the inside waterproof plate is fixedly connected to an elongated upper water baffle that abuts against the interior trim strip; the lower waterproof guide frame is fixedly connected to a lower water baffle located below the upper water baffle, and the lower water baffle also abuts against the interior trim strip.

8. The zero-offset door sealing system according to claim 1, wherein the cross-section of the interior trim strip is U-shaped, and an inner ring side of the interior trim strip is fixedly connected to a plurality of inner lip edges; the interior trim strip clamps and fixes the upper reinforcement plate and the lower reinforcement plate via the plurality of inner lip edges.

9. The zero-offset door sealing system according to claim 1, wherein the inner ring of the upper waterproof guide frame is fixedly connected to an inner support flange located above an inner bottom surface of the connecting bracket, and an inner ring of the inner support flange forms a channel allowing for displacement of the slider and the connecting strip.

10. The zero-offset door sealing system according to claim 9, wherein an upper end of the inner support flange located at an outer ring of the channel is provided with a guide groove, and the cross-sectional area of the channel opening at the guide groove gradually decreases from top to bottom.

11. The zero-offset door sealing system according to claim 1, wherein the outer upper waterproof plate comprises an arc-shaped outer upper main waterproof portion, and the outer lower waterproof plate comprises an arc-shaped outer lower main waterproof portion having the same cross-sectional shape as the outer upper main waterproof portion.

12. The zero-offset door sealing system according to claim 11, wherein the outer upper waterproof plate further comprises an arc-shaped outer upper auxiliary waterproof portion, and the arc length of the outer upper auxiliary waterproof portion is less than the arc length of the outer upper main waterproof portion; the outer lower waterproof plate further comprises an arc-shaped outer lower auxiliary waterproof portion having the same cross-sectional shape as the outer upper auxiliary waterproof portion, and the cross-section of the outer lower auxiliary waterproof portion is the same as the cross-section of the outer upper auxiliary waterproof portion; the outer lower auxiliary waterproof portion and the outer upper auxiliary waterproof portion are both arranged fitting against one side of the plastic bracket and the connecting bracket.

13. The zero-offset door sealing system according to claim 4, wherein the slider has a circular cross-section to achieve low-friction line-contact sliding within the inner guide strip.

14. The zero-offset door sealing system according to claim 1 or 8, wherein the interior trim strip and the inner waterproof plate are an integrally formed structure to enhance the structural integrity and water tightness of this assembly.

15. The zero-offset door sealing system according to claim 1, wherein the flared setting of the connecting bracket forms an introduction slope for guiding the rapid positioning and assembly of the upper waterproof guide frame.

16. The zero-offset door sealing system according to claim 11, wherein it further comprises an inner guide strip, and an assembly slidable within the inner guide strip; the assembly comprises a slider with a circular cross-section, a connecting piece, and a sealing strip for contacting the movable glass.
